(19) Europäisches Patentamt
European Patent Office
Office européen des brevets

(11) Veröffentlichungsnummer: **0 012 289 B1**

# (12) EUROPÄISCHE PATENTSCHRIFT

(45) Veröffentlichungstag der Patentschrift: **16.03.83**

(51) Int. Cl.³: **C 09 B 62/06,** D 06 P 3/66, D 06 P 3/10

(21) Anmeldenummer: **79104799.6**

(22) Anmeldetag: **01.12.79**

(54) **Anthrachinon-Reaktivfarbstoffe sowie deren Herstellung und Verwendung zum Färben von OH- oder N-haltigen Materialien.**

(30) Priorität: **06.12.78 DE 2852672**

(43) Veröffentlichungstag der Anmeldung: **25.06.80 Patentblatt 80/13**

(45) Bekanntmachung des Hinweises auf die Patenterteilung: **16.03.83 Patentblatt 83/11**

(84) Benannte Vertragsstaaten: **CH DE FR GB IT**

(56) Entgegenhaltungen:
**FR-A-1 573 149**
**FR-A-2 393 034**
**GB-A-1 181 744**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **von Oertzen, Klaus, Dr., Hahnenweg 8, D-5000 Köln 80 (DE)**
Erfinder: **Harms, Wolfgang, Dr., Walter-Flex-Strasse 21, D-5090 Leverkusen (DE)**
Erfinder: **Wunderlich, Klaus, Dr., Carl-Rumpff-Strasse 21, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

EP 0 012 289 B1

# Anthrachinon-Reaktivfarbstoffe sowie deren Herstellung und Verwendung zum Färben von OH- oder N-haltigen Materialien

Gegenstand der vorliegenden Erfindung sind Farbstoffe der Formel

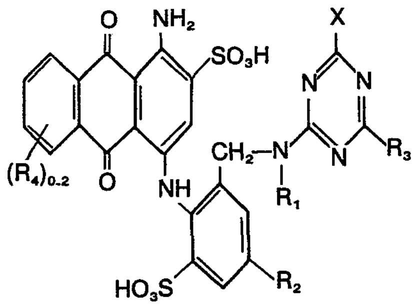

(I)

worin
X = Halogen
$R_1$ = Wasserstoff oder Methyl
$R_2$ = $C_1$–$C_4$–Alkyl
$R_3$ = Halogen, $OR_7$, $SR_7$ oder $-N(R_5)(R_6)$

wobei $R_7$ = gegebenenfalls substituiertes $C_1$–$C_4$–Alkyl, gegebenenfalls substituiertes Aryl oder Aralkyl und wobei $R_5$ und $R_6$ unabhängig voneinander für H, gegebenenfalls substituiertes Alkyl oder Aralkyl stehen oder zusammen mit dem durch sie eingeschlossenen Stickstoffatom einen 5- oder 6-Ringheterocyclus bilden, oder

für den Rest 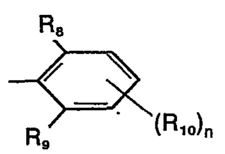 stehen,

wobei $R_8$ und $R_9$ = H oder $SO_3H$ und
$R_{10}$ = $SO_3H$, Halogen, COOH, $CH_3$, $SO_2CH_2$-$CH_2OSO_3H$
oder $SO_2NH$-$CH_2$-$CH_2$-$OSO_3H$,
n = 0 bis 2
$R_4$ = $SO_3H$.

Besonders zu erwähnende Substituenten $R_3$ sind:
Amino-, Methylamino-, Dimethylamino-, Ethylamino-, Diethylamino-, Isopropylamino-, Butylamino-, Dibutylamino-, sec.-Butylamino-, Isobutylamino-, Diisobutylamino-, tert.-Butylamino-, Methoxyethylamino-, Sulfatoethylamino-, Methoxypropylamino-, Ethoxypropylamino-, Carboxymethylamino-, N-Methyl-N-carboxymethylamino-, Carboxyethylamino-, Carboxypropylamino-, N-Methyl-N-sulfomethylamino-, Sulfoethylamino-, N-Methyl-N-sulfoethylamino-, Pyrrolidino-, Piperidino-, 2-Methylpiperidino-, Hexamethylenimino-, 1-Methylpiperazino-, Morpholino-, 4-Morpholinamino-, Benzylamino, N-Methylbenzylamino-, Dibenzylamino.

Als Reste $R_7$ seien erwähnt:
Methyl, Ethyl, Propyl, Isopropyl, Butyl, Isobutyl, sec.-Butyl, tert. Butyl, weiterhin Aralkyl, insbesondere gegebenenfalls substituiertes Benzyl und Aryl. Aryl steht dabei insbesondere für Phenyl oder Naphthyl, die substituiert sein können.

Bevorzugt sind Reaktivfarbstoffe der Formel

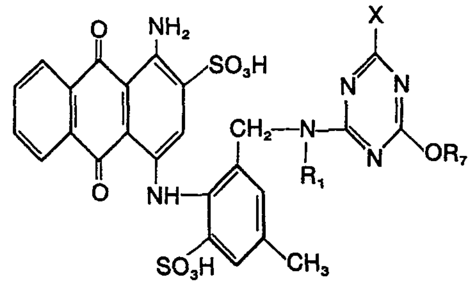

worin
X = F oder Cl
$R_1$ = H oder Methyl und
$R_7$ = gegebenenfalls substituiertes $C_1$–$C_4$–Alkyl

und weiterhin Reaktivfarbstoffe der Formel

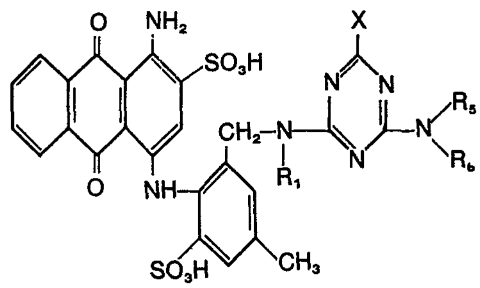

worin
X = Fluor oder Chlor
$R_1$ = H oder Methyl
$R_5$ und $R_6$ = unabhängig voneinander H, gegebenenfalls substituiertes Alkyl, Aralkyl oder

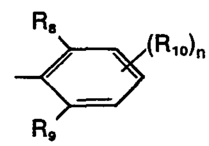

wobei
$R_8$ und $R_9$ = H oder $SO_3H$ und
$R_{10}$ = $SO_3H$, Halogen, COOH, $CH_3$, $SO_2CH_2CH_2OSO_3H$ oder $SO_2NH$-$CH_2$-$CH_2$-$OSO_3H$
n = 0, 1 oder 2

und wobei weiterhin
$R^5$ und $R^6$ zusammen mit dem durch sie eingeschlossenen N-Atom einen 5- oder 6-Ringheterocyclus bilden können.

Die Herstellung der Farbstoffe erfolgt beispielsweise

1. durch Umsetzung von Verbindungen der Formel

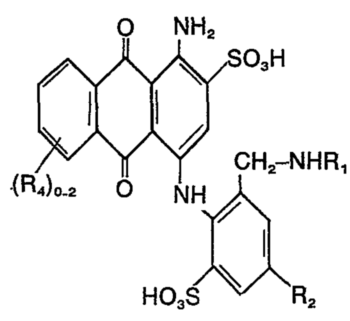

(II)

worin $R_1$, $R_2$ und $R_4$ die oben angegebene Bedeutung haben, mit Verbindungen der Formel

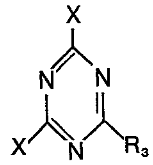

(III)

worin X = Halogen und $R_3$ die oben genannte Bedeutung haben.

Die Verbindungen III erhält man durch Umsetzung von Trihalogentriazinen mit Verbindungen

$R_3$–H (IV),

2. durch Umsetzung von Verbindungen der Formel

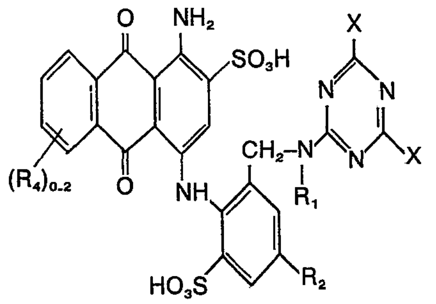

(V)

worin X = Halogen und $R_1$, $R_2$ und $R_4$ die oben genannte Bedeutung haben, mit Verbindungen IV.

Die Umsetzungen der Verbindungen II mit Verbindungen III werden in wässrigem oder organisch-wässrigem Medium bei Temperaturen zwischen −10 und +80 °C, vorzugsweise 0–50 °C, und bei pH-Werten zwischen 4 und 10, vorzugsweise 5–9, in Gegenwart alkalischer Kondensationsmittel wie wässrigen Alkalihydroxid-, Alkalicarbonat- oder Alkaliphosphat-Lösungen, durchgeführt.

Auf analoge Weise führt man auch die Umsetzungen der Verbindungen IV mit den Trihalogentriazinen zu den Verbindungen III und die Umsetzungen der Verbindungen V mit den Verbindungen IV durch.

Aus der FR-A-1 573 149 sind ähnlich strukturierte Anthrachinon-Reaktivfarbstoffe bekannt, die aber nicht die für die erfindungsgemässen Farbstoffe charakteristische Struktur des Brückenglieds der Formel

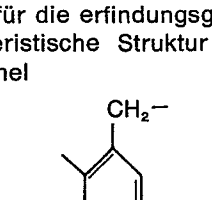

aufweisen.

Das gleiche gilt für die Antrachinon-Reaktivfarbstoffe gemäss GB-A-1 181 744.

Geeignete Verbindungen IV sind beispielsweise Methanol, Ethanol, Propanol, Isopropanol, n-Butanol, Isobutanol, sek.-Butanol, tert.-Butanol, β-Methoxyethanol, β-Ethoxyethanol, γ-Methoxy-propanol, γ-Ethoxypropanol, Glycolsäure, Phenol, o-, m- und p-Chlorphenol, o-, m- und p-Nitrophenol, o-, m- und P-Hydroxybenzoesäure, o-, m- und p-Phenolsulfonsäure, Phenol-2,4-disulfonsäure, α-Naphtol, β-Naphthol, 1-Hydroxynaphthalin-8-sulfonsäure, 2-Hydroxynaphthalin-1-sulfonsäure, 1-Hydroxynaphthalin-5-sulfonsäure, 1-Hydroxynaphthalin-4-sulfonsäure, 1-Hydroxynaphthalin-6- oder -7-sulfonsäure, 2-Hydroxy-naphthalin-6-, -7- oder -8-sulfonsäure, 2-Hydroxynaphthalin-4-sulfonsäure, 2-Hydroxynaphthalin-4,8- oder -6,8-disulfonsäure, 1-Hydroxy-naphthalin-4,8-disulfonsäure, 2-Hydroxynaphthalin-3,6-disulfonsäure, Methanthiol, Ethanthiol, Propanthiol, Isopropanthiol, n-Butanthiol, Thioglykol, Thioglycolsäure, Thiophenol, α-Thionaphthol, β-Thionaphthol, Ammoniak, Methylamin, Dimethylamin, Ethylamin, Diethylamin, Propylamin, Isopropylamin, Butylamin, Dibutylamin, Isobutylamin, sek.-Butylamin, tert.-Butylamin, Hexylamin, Methoxyethylamin, Ethoxyethylamin, Methoxypropylamin, Chlorethylamin, Hydroxyethylamin, Dihydroxyethylamin, Hydroxypropylamin, Aminoethansulfonsäure, β-Sulfatoethylamin, Benzylamin, Anilin, m- und p-Toluidin, 3,4- und 3,5-Dimethylanilin, m- und p-Chloranilin, N-Methylanilin, N-Ethylanilin, Orthanilsäure, Metanilsäure, Sulfanilsäure, Anilin-2,4-disulfonsäure, Anilin-2,5-disulfonsäure, m- und p-Aminobenzoesäure, 1-Amino-4-carboxy-benzol-3-sulfonsäure, 1-Amino-5-carboxybenzol-2-sulfonsäure, Morpholin, Piperidin, Piperazin.

Die neuen Farbstoffe eignen sich zum Färben und Bedrucken von hydroxylgruppen- und N-haltigen Textilmaterialien, von nativer und regenerierter Cellulose und von Wolle, Seide, synthetischen Polyamiden und Polyurethanen.

Die genannten Materialien werden nach den für Reaktiv-Farbstoffe üblichen Verfahren gefärbt oder bedruckt.

Die in der Beschreibung angegebenen Formeln sind die der freien Säuren. Die Färbung erfolgt im allgemeinen mit den Salzen, insbesondere den Alkalisalzen, vorzugsweise Natriumsalzen, Kaliumsalzen oder Lithiumsalzen. In den Beispielen sind die Temperaturen in °C angegeben.

Beispiel 1

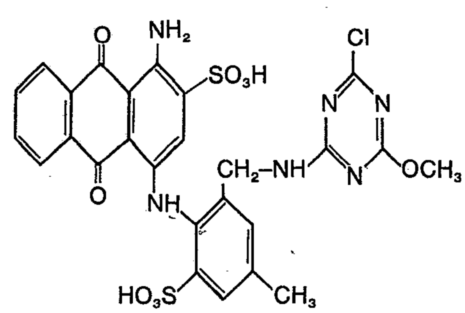

20 g 1-Amino-4-(4′-methyl-2′-aminomethylphenylamino-)anthrachinon-2,6′-disulfonsäure werden bei 20–25 °C in 200 ml Wasser verrührt und durch Zusatz von etwa 22 ml 2n Natronlauge bei pH 6–7 in Lösung gebracht. Man fügt 9 g 4,6-Dichlor-2-methoxy-triazin hinzu und hält durch Zutropfen von 2n Natronlauge den pH-Wert zwischen 6,5 und 7. Nach beendeter Reaktion bringt man den teilweise ausgefallenen Farbstoff bei 60 °C in Lösung, klärt nach Zusatz von 4 g Aktivkohle und fügt zum heissen Filtrat 5 g Natriumchlorid hinzu. Bei 35 °C saugt man den kristallisierten Farbstoff ab und wäscht mit 10%iger NaCl-Lösung. Trocknung ist bei 40°C im Vakuum. Auf Baumwolle liefert der Farbstoff nach den für Reaktivdrucke üblichen Verfahren sehr klare, kräftige, rotstichig blaue Drucke mit sehr guten Licht-, Nass- und Chlorechtheiten.

Beispiel 2

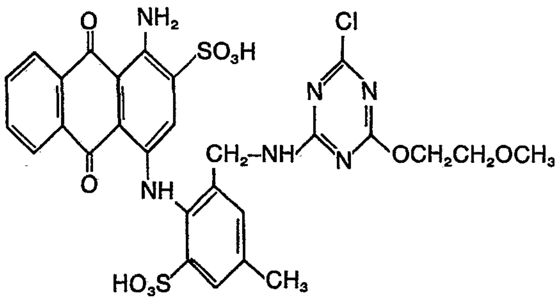

Zu der wie im Beispiel 1 hergestellten neutralen Lösung der 1-Amino-4-(4′-methyl-2′-aminomethyl-phenylamino-)-anthrachinon-2,6′-disulfonsäure werden 10,4 g 4,6-Dichlor-2-(2′-methoxy-ethoxy-)triazin bei 20–25 °C zugetropft. Der pH-Wert wird durch Zutropfen von 2n NaOH bei 6,5 bis 7 gehalten. Nach beendeter Reaktion salzt man mit 15 g Natriumchlorid aus, saugt den kristallisierten Farbstoff ab und wäscht mit 15%iger Natriumchlorid-Lösung.

Bei besserer Löslichkeit zeigt der Farbstoff die gleichen färberischen Eigenschaften wie der im Beispiel 1 beschriebene.

Analog den Beispielen 1 und 2 lassen sich durch Verwendung der entsprechenden Ausgangsverbindungen die in der folgenden Tabelle aufgeführten Farbstoffe der allgemeinen Formel

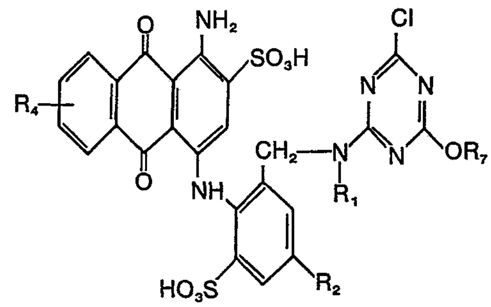

herstellen:

| Beispiel | $R_1$ | $R_2$ | $R_7$ | $R_4$ | Farbton auf Baumwolle |
|---|---|---|---|---|---|
| 3 | H | $CH_3$ | $CH_3$ | 6–$SO_3H$ | neutrales Blau |
| 4 | H | n–$C_4H_9$ | $CH_3$ | H | rotstichiges Blau |
| 5 | $CH_3$ | $CH_3$ | $CH_2CH_2OCH_3$ | H | rotstichiges Blau |
| 6 | H | $C_2H_5$ | $CH_3$ | H | rotstichiges Blau |
| 7 | H | $C(CH_3)_3$ | $CH_3$ | H | rotstichiges Blau |
| 8 | H | $CH_3$ | $CH(CH_3)_2$ | H | rotstichiges Blau |
| 9 | $CH_3$ | $CH_3$ | $CH_2CH_2OCH_3$ | 7–$SO_3H$ | neutrales Blau |
| 10 | H | $CH(CH_3)_2$ | $CH_2CH_2OCH_3$ | H | rotstichiges Blau |
| 11 | H | $CH_3$ | $CH_3$ | 5–$SO_3H$ | neutrales Blau |

Beispiel 12

a) 10 g 1-Amino-4-(4′-methyl-2′-aminomethyl-phenylamino-)anthrachinon-2,6′-disulfonsäure werden bei 20–25 °C in 100 ml Wasser unter Zusatz von ca. 11 ml 2n Natronlauge gelöst. Man fügt 50 ml Dimethylformamid zu und tropft bei 0 °C die Lösung von 4,3 g 2,4,6-Trichlortriazin in 25 ml Aceton zu. Mit 2n Sodalösung hält man den pH-Wert bei 5, bis die Reaktion beendet ist. Das Zwischenprodukt der Formel

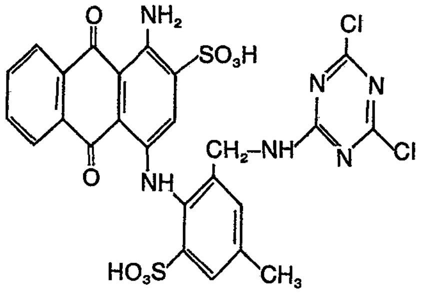

wird mit 35 g NaCl kristallisiert abgeschieden, abgesaugt und mit 15%iger NaCl-Lösung gewaschen.

b) Das nach a) erhaltene Zwischenprodukt wird im Gemisch von 100 ml Wasser und 100 ml Methanol gelöst. Man stellt den pH-Wert mit 2n Natronlauge auf 9,5–10 ein, erwärmt auf 35 °C und hält durch Zutropfen der Lauge den angegebenen pH-Wert, bis das Zwischenprodukt verbraucht ist. Durch Zufügen von 20 g NaCl scheidet man den Farbstoff kristallisiert ab.

Er ist identisch mit dem Farbstoff des Beispiels 1.

Der Farbstoff lässt sich auch ohne Isolierung des Zwischenprodukts herstellen, indem man nach Beendigung der unter a) beschriebenen Reaktion mit 100 ml Methanol versetzt, pH-Wert und Temperatur auf die unter b) angegebenen Werte einstellt und weiter wie dort verfährt.

Beispiel 13

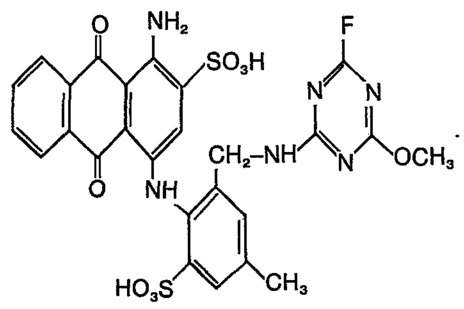

20 g 1-Amino-4-(4′-methyl-2′-aminomethyl-phenylamino-)-anthrachinon-2,6′-disulfonsäure werden in 200 ml Wasser durch Zusatz von etwa 23 ml 2n Natronlauge gelöst. Die Lösung wird auf 5° gekühlt und im Laufe von 15 Minuten mit 8 g 4,6-Difluor-2-methoxy-triazin versetzt. Dabei hält man den pH-Wert durch Zutropfen von 2n Soda-Lösung bei 6,5. Nach beendeter Reaktion salzt man den Farbstoff mit 10 g Natriumchlorid aus, saugt das kristallierte Produkt ab, wäscht mit 10%iger NaCl-Lösung und trocknet bei 40 °C im Vakuum.

Auf Baumwolle liefert der Farbstoff nach den für den Reaktivdruck üblichen Verfahren sehr klare, kräftige, rotstichig blaue Drucke mit sehr guten Licht-, Nass- und Chlorechtheiten.

Beispiel 14

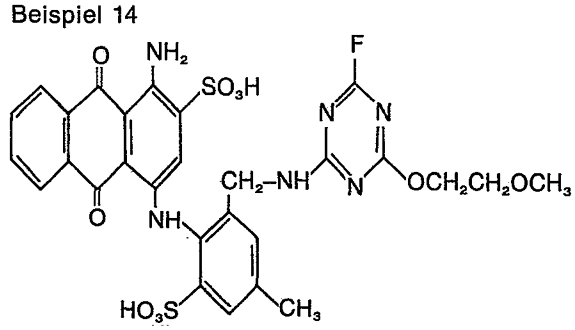

Ersetzt man im Beispiel 13 die 8 g 4,4-Difluor-2-methoxy-triazin durch 10,1 g 4,6-Difluor-2-methoxyethoxytriazin und verfährt im übrigen wie dort beschrieben, so erhält man einen kristallisierten Farbstoff, der bei noch besserer Löslichkeit die gleichen färberischen Eigenschaften besitzt.

Analog dem Beispiel 13 lassen sich durch Verwendung der entsprechenden Ausgangsverbindungen die in der folgenden Tabelle aufgeführten Farbstoffe der allgemeinen Formel

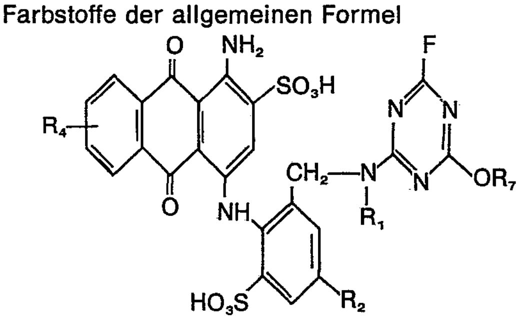

herstellen:

| Beispiel | $R_1$ | $R_2$ | $R_7$ | $R_4$ | Farbton auf Baumwolle |
|---|---|---|---|---|---|
| 15 | H | $CH_3$ | $CH_3$ | 6–$SO_3H$ | neutrales Blau |
| 16 | H | n–$C_4H_9$ | $CH_3$ | H | rotstichiges Blau |
| 17 | $CH_3$ | $CH_3$ | $CH_2CH_2OCH_3$ | H | rotstichiges Blau |
| 18 | H | $C_2H_5$ | $CH_3$ | H | rotstichiges Blau |
| 19 | H | $C(CH_3)_3$ | $CH_3$ | H | rotstichiges Blau |
| 20 | H | $CH_3$ | $CH(CH_3)_2$ | H | rotstichiges Blau |
| 21 | $CH_3$ | $CH_3$ | $CH_2CH_2OCH_3$ | 7–$SO_3H$ | neutrales Blau |
| 22 | H | $CH(CH_3)_2$ | $CH_2CH_2OCH_3$ | H | rotstichiges Blau |
| 23 | H | $CH_3$ | $CH_3$ | 5–$SO_3H$ | neutrales Blau |

Beispiel 24

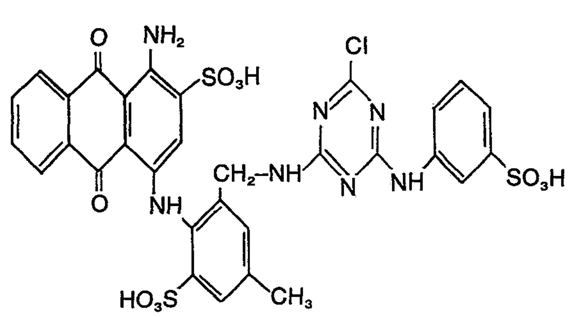

25 g 1-Amino-4-(4′-methyl-2′-aminomethyl-phenylamino-)-anthrachinon-2,6′-disolfonsäure werden in 250 ml Wasser bei pH 7 gelöst. Man tropft bei 20–25 °C in 30 Minuten die Lösung des Umsetzungsproduktes von 9,2 g Metanilsäure mit 9,8 g Cyanurchlorid in 250 ml Wasser zu, wobei man den pH-Wert mit 2n Soda-Lösung bei 7–7,5 hält. Nach Reaktionsende salzt man den Farbstoff durch Zugabe von 55 g Natriumchlorid aus, saugt ab, wäscht mit 15%iger Natriumchloridlösung und trocknet bei 40 °C im Vakuum. Der Farbstoff liefert auf Baumwolle klare, rotstichige blaue Drucke mit hohem Echtheitsniveau.

Beispiel 25

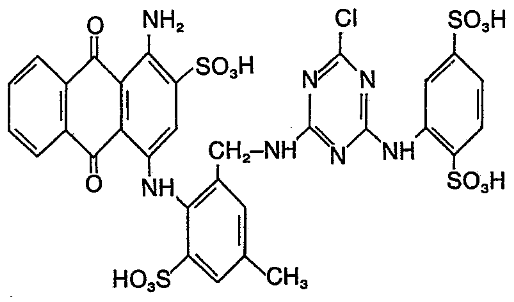

Ersetzt man in Beispiel 24 die Metanilsäure durch die äquivalente Menge Anilin-2,5-disulfonsäure, führt die Reaktion in analoger Weise durch und salzt mit 150 g Natriumchlorid aus, so erhält man einen Farbstoff mit ähnlichen Eigenschaften bei noch besserer Löslichkeit.

Beispiel 26

10 g des Zwischenproduktes nach Beispiel 12a werden in 150 ml Wasser gelöst. Man tropft die Lösung von 2,7 g Metanilsäure, 22 ml Wasser und 8 ml 2n NaOH bei 25–30°C zu und hält den pH-Wert mit 2n Natronlauge bei 7–7,5. Nach beendeter Reaktion salzt man den Farbstoff mit 20 g Natriumchlorid aus. Er ist identisch mit dem in Beispiel 24 beschriebenen Produkt.

Analog den Beispielen 24 bis 26 lassen sich durch Verwendung der entsprechenden Ausgangsverbindungen die in der folgenden Tabelle aufgeführten Farbstoffe der allgemeinen Formel

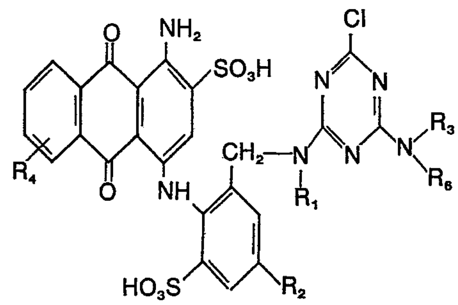

herstellen:

| Beispiel | $R_1$ | $R_2$ | $R_3$ | $R_6$ | $R_4$ | Farbton auf Baumwolle |
|---|---|---|---|---|---|---|
| 27 | H | $CH_3$ | H | 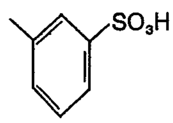 | 6–$SO_3H$ | neutrales Blau |
| 28 | $CH_3$ | $CH_3$ | $CH_3$ | $-CH_2SO_3H$ | H | rotstichiges Blau |
| 29 | H | $CH_3$ | H | $-CH_2CH_2SO_3H$ | H | rotstichiges Blau |
| 30 | H | $C(CH_3)_3$ | H | $-CH_2CH_2OSO_3H$ | H | rotstichiges Blau |
| 31 | $CH_3$ | $CH_3$ | H | $-CH_2CH_2SO_3H$ | H | rotstichiges Blau |
| 32 | H | $CH_3$ | H | 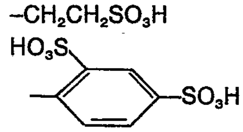 | 5–$SO_3H$ | neutrales Blau |
| 33 | H | $CH_3$ | H | 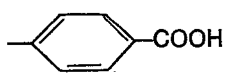 | H | rotstichiges Blau |
| 34 | H | n–$C_4H_9$ | H | 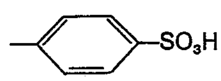 | H | rotstichiges Blau |
| 35 | H | $CH_3$ | H | 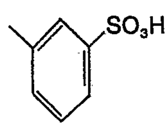 | 7–$SO_3H$ | neutrales Blau |
| 36 | H | $C_2H_3$ | H | $-CH_2CH_2OSO_3H$ | H | rotstichiges Blau |
| 37 | H | $CH_3$ | H | 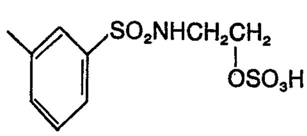 | H | rotstichiges Blau |
| 38 | H | $CH_3$ | H | 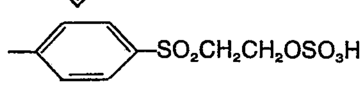 | H | rotstichiges Blau |

Beispiel 39

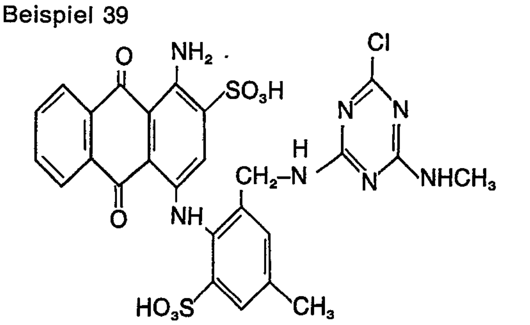

10g 1-Amino-4-(4′-methyl-2′-aminomethylphenylamino-)-anthrachinon-2,6′-disulfonsäure, in 150 ml Wasser mit 12 ml NaOH in Lösung gebracht, werden mit 5,9 g 2-Methylamino-4,6-dichlor-triazin versetzt. Man heizt auf 40°C und hält den pH-Wert mit 2n Natronlauge bei pH 7,5. Nach beendeter Reaktion filtriert man von unlöslichen Rückständen, fügt zum Filtrat 10 g NaCl, saugt den ausgeschiedenen Farbstoff ab, wäscht mit 10%iger Natriumchloridlösung und trocknet bei 45°C im Vakuum.

Auf Baumwolle liefert der Farbstoff nach den üblichen Reaktivdruckverfahren klare, rotstichig blaue Drucke von hohem Echtheitsniveau.

Beispiel 40

10 g des Zwischenprodukts nach Beispiel 12a werden in 150 ml Wasser gelöst. Man tropft 1,75 g 30%ige wässrige Methylaminlösung zu und hält den pH-Wert mit 2n Natronlauge bei 8. Wenn kein Ausgangsprodukt mehr nachweisbar ist, salzt man mit 10 g Natriumchlorid aus. Der so erhaltene Farbstoff ist identisch mit dem des Beispiels 39.

Analog den Beispielen 39 und 40 lassen sich durch Verwendung der entsprechenden Ausgangsverbindungen die in der folgenden Tabelle aufgeführten Farbstoffe der allgemeinen Formel

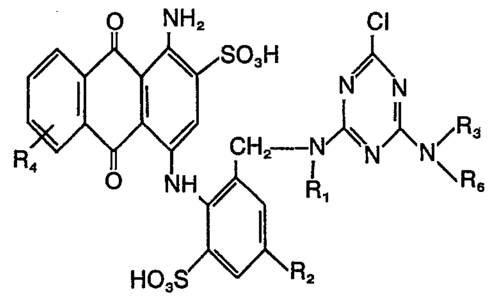

herstellen:

| Beispiel | $R_1$ | $R_2$ | $R_3$ | $R_6$ | $R_4$ | Farbton auf Baumwolle |
|---|---|---|---|---|---|---|
| 41 | H | $CH_3$ | $CH_3$ | $CH_3$ | H | rotstichiges Blau |
| 42 | $CH_3$ | $CH_3$ | H | $CH_3$ | H | rotstichiges Blau |
| 43 | H | $CH_3$ | H | 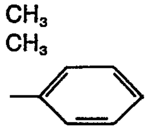 | H | rotstichiges Blau |
| 44 | H | $CH_3$ | $C_2H_5$ | $C_2H_5$ | H | rotstichiges Blau |
| 45 | H | $C(CH_3)_3$ | H | $CH_3$ | H | rotstichiges Blau |
| 46 | H | $CH_3$ | H | $CH_3$ | 7–$SO_3H$ | neutrales Blau |
| 47 | H | $CH_3$ | H | $nC_4H_9$ | H | rotstichiges Blau |

Beispiel 48

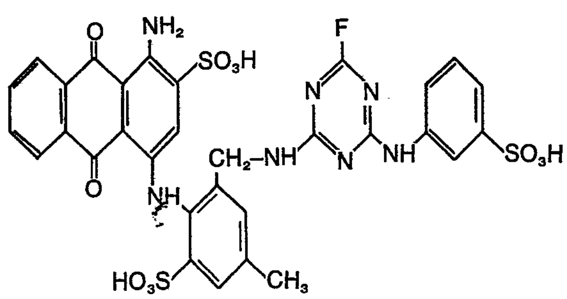

Zu der wie im Beispiel 1 hergestellten Lösung von 20 g 1-Amino-4-(4′-methyl-2′-aminomethylphenylamino-)-anthrachinon-2,6′-disulfonsäure in 200 ml Wasser lässt man bei 20°C die Lösung des Reaktionsprodukts von 10,7 g Metanilsäure mit 8,3 g Trifluortriazin in 120 ml Wasser zulaufen. Dabei hält man den pH-Wert mit 2n Natronlauge bei pH 6,5–7. Wenn chromatographisch kein Ausgangsmaterial mehr nachzuweisen ist, salzt man mit 45 g Natriumchlorid aus, saugt die schwarzblauen Kristalle ab und wäscht mit 15%iger Natriumchloridlösung. Der bei 45°C getrocknete Farbstoff liefert auf Baumwolle sehr klare rotstichig blaue Drucke mit sehr guten Echtheitseigenschaften.

Analog dem Beispiel 48 lassen sich durch Verwendung der entsprechenden Ausgangsverbindungen die in der folgenden Tabelle aufgeführten Farbstoffe der allgemeinen Formel

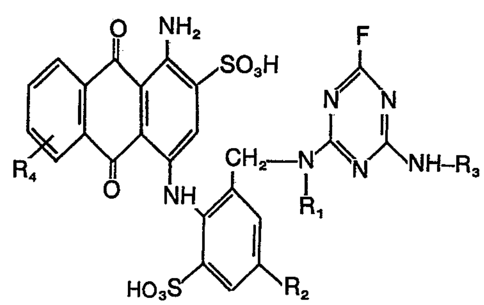

herstellen:

| Beispiel | $R_1$ | $R_2$ | $R_3$ | $R_4$ | Farbton auf Baumwolle |
|---|---|---|---|---|---|
| 49 | H | $CH_3$ | 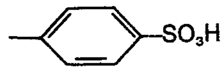 | H | rotstichiges Blau |
| 50 | H | $CH_3$ | 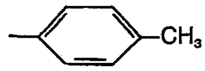 | H | rotstichiges Blau |
| 51 | $CH_3$ | $CH_3$ | 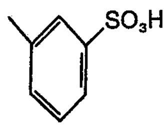 | H | rotstichiges Blau |
| 52 | H | $C(CH_3)_3$ | 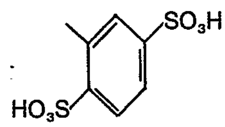 | H | rotstichiges Blau |
| 53 | H | $CH_3$ | 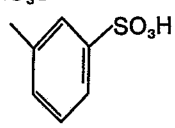 | 6–$SO_3H$ | neutrales Blau |
| 54 | H | $CH_3$ | 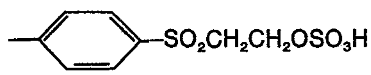 | H | rotstichiges Blau |

Beispiel 55

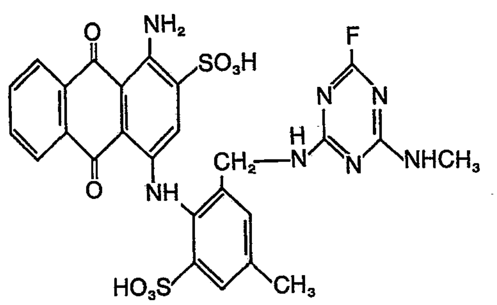

Zu der wie im Beispiel 1 hergestellten Lösung von 20 g 1-Amino-4-(4′-methyl-2′-aminomethyl-phenylamino-)-anthrachinon-2,6′-disulfonsäure in 200 ml Wasser fügt man bei 20°C 7,3 g Methylamino-difluortriazin. Man hält den pH-Wert mit 2n Natronlauge bei 6,5–7, bis die Reaktion beendet ist. Durch Zufügen von 20 g Natriumchlorid scheidet man den Farbstoff in kristallisierter Form ab, saugt ab, wäscht mit 15%iger Natriumchlorid-Lösung und trocknet bei 45°C. Der Farbstoff liefert auf Baumwolle klare, rotstichig blaue Drucke mit sehr guten Echtheiten.

In ähnlicher Weise lassen sich durch Verwendung der entsprechenden Ausgangsverbindungen die in der folgenden Tabelle aufgeführten Farbstoffe der allgemeinen Formel

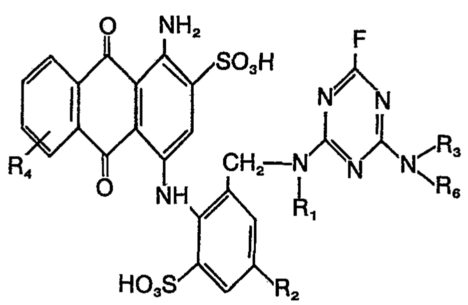

herstellen:

| Beispiel | $R_1$ | $R_2$ | $R_3$ | $R_6$ | $R_4$ | Farbton auf Baumwolle |
|---|---|---|---|---|---|---|
| 56 | H | $CH_3$ | $C_2H_5$ | $C_2H_5$ | H | rotstichiges Blau |
| 57 | H | $CH_3$ | H | $CH_3$ | 7–$SO_3H$ | neutrales Blau |
| 58 | $CH_3$ | $CH_3$ | $CH_3$ | $CH_3$ | H | rotstichiges Blau |
| 59 | H | $C(CH_3)_3$ | H | $CH_3$ | H | rotstichiges Blau |

**Patentansprüche**

1. Reaktivfarbstoffe der Formel

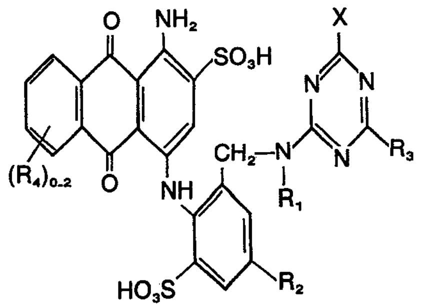

worin
X = Halogen
$R_1$ = Wasserstoff oder Methyl
$R_2$ = $C_1$–$C_4$-Alkyl
$R_3$ = Halogen, $OR_7$, $SR_7$ oder 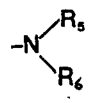

wobei $R_7$ = gegebenenfalls substituiertes $C_1$–$C_4$-Alkyl, gegebenenfalls substituiertes Aryl oder Aralkyl und
wobei $R_5$ und $R_6$ unabhängig voneinander für H, gegebenenfalls substituiertes Alkyl oder Aralkyl stehen oder zusammen mit dem durch sie eingeschlossenen Stickstoffatom einen 5- oder 6-Ring-Heterocyclus bilden oder

für den Rest 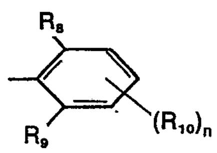

stehen,
wobei $R_8$ und $R_9$ = H oder $SO_3H$ und
$R_{10}$ = $SO_3H$, Halogen, COOH, $CH_3$, $SO_2CH_2$-$CH_2OSO_3H$
oder $SO_2NH$–$CH_2$–$CH_2$–$OSO_3H$
n = 0 bis 2
$R_4$ = $SO_3H$.

2. Reaktivfarbstoffe der Formel

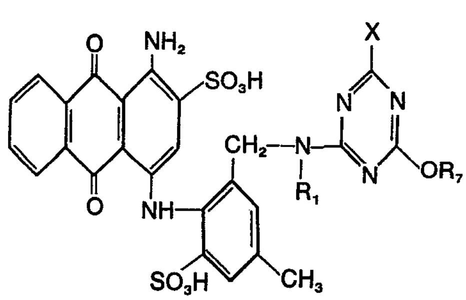

worin
X = F oder Cl
$R_1$ = H oder Methyl und
$R_7$ = gegebenenfalls substituiertes $C_1$–$C_4$-Alkyl.

3. Reaktivfarbstoffe der Formel

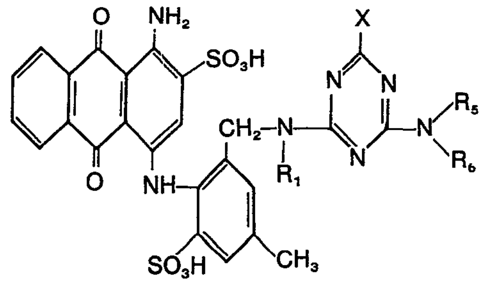

worin
X = Fluor oder Chlor
$R_1$ = H oder Methyl
$R_5$ und $R_6$ = unabhängig voneinander H, gegebenenfalls substituiertes Alkyl, Aralkyl oder

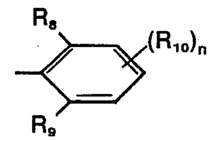

wobei $R_8$ und $R_9$ = H oder $SO_3H$
und $R_{10}$ = $SO_3H$, Halogen, COOH, $CH_3$, $SO_2CH_2$-$CH_2$–$OSO_3H$ oder $SO_2NH$–$CH_2$–$CH_2$–$OSO_3H$
n = 0, 1 oder 2

und wobei weiterhin
$R_5$ und $R_6$ zusammen mit dem durch sie eingeschlossenen N-Atom einen 5- oder 6-Ringheterocyclus bilden können.

4. Verwendung der Farbstoffe der Patentansprüche 1 bis 3 zum Färben und Bedrucken von hydroxylgruppen- oder stickstoffhaltigen Materialien.

**Claims**

1. Reactive dyestuffs of the formula

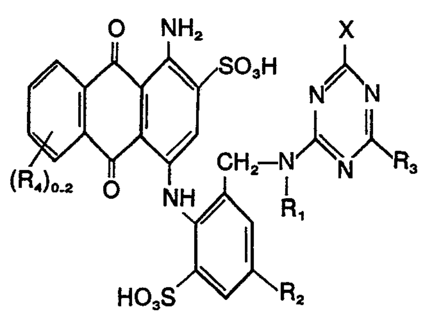

wherein
X = halogen,
$R_1$ = Hydrogen or methyl,
$R_2$ = $C_1$–$C_4$-alkyl,
$R_3$ = halogen, $OR_7$, $SR_7$ or 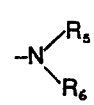

wherein
$R_7$ = optionally substituted $C_1$–$C_4$-alkyl, optionally substituted aryl or aralkyl and wherein $R_5$ and $R_6$,

independently of one another, represent H, optionally substituted alkyl or aralkyl, or together with the nitrogen atom between them form a heterocyclic 5-membered or 6-membered ring, or represent the radical

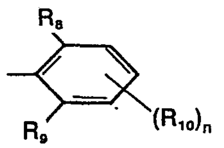

wherein
$R_8$ and $R_9$ = H or $SO_3H$ and
$R_{10}$ = $SO_3H$, halogen, COOH, $CH_3$, $SO_2CH_2CH_2$-$OSO_3H$ or $SO_2NH$–$CH_2$–$CH_2$–$OSO_3H$ and
n = 0 to 2, and
$R_4$ = $SO_3H$.

2. Reactive dyestuffs of the formula

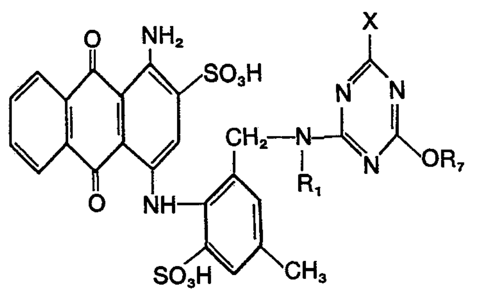

wherein
X = F or Cl,
$R_1$ = H or methyl and
$R_7$ = optionally substituted $C_1$–$C_4$-alkyl.

3. Reactive dyestuffs of the formula

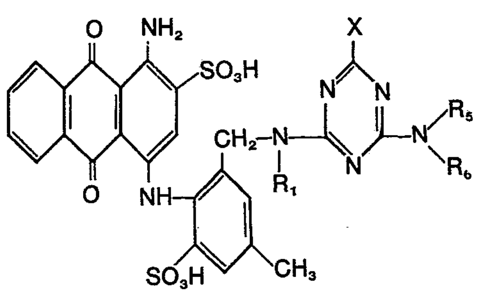

wherein
X = fluorine or chlorine,
$R_1$ = H or methyl,
$R_5$ and $R_6$ = independently of one another, H, optionally substituted alkyl, aralkyl or

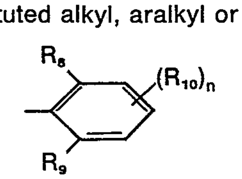

wherein
$R_8$ and $R_9$ = H or $SO_3H$ and
$R_{10}$ = $SO_3H$, halogen, COOH, $CH_3$, $SO_2CH_2CH_2$-$OSO_3H$ or $SO_2NH$–$CH_2$–$CH_2$–$OSO_3H$ and
n = 0, 1 or 2,
and wherein furthermore
$R_5$ and $R_6$, together with the N-atom between them, can form a heterocyclic 5-membered or 6-membered ring.

4. Use of the dyestuffs of patent claims 1 to 3 for dyeing and printing materials containing hydroxyl groups or nitrogen.

**Revendications**

1. Colorants réactifs de formule:

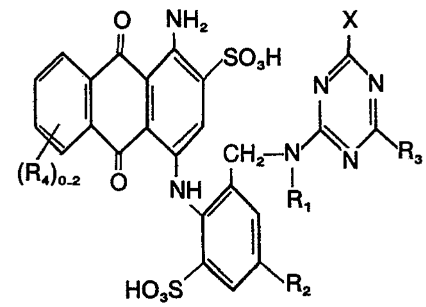

dans laquelle
X = halogène
$R_1$ = hydrogène ou méthyle
$R_2$ = alkyle en $C_1$ à $C_4$
$R_3$ = halogène, $OR_7$, $SR_7$ ou 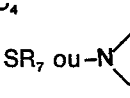

$R_7$ désignant un groupe alkyle en $C_1$ à $C_4$ éventuellement substitué, aryle éventuellement substitué ou aralkyle et $R_5$ et $R_6$ représentant, indépendamment l'un de l'autre, H, un groupe alkyle éventuellement substitué ou un groupe aralkyle ou formant conjointement avec l'atome d'azote qu'ils encadrent, un hétérocycle pentagonal ou hexagonal, ou le reste de formule

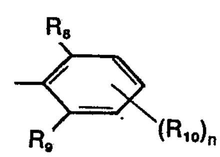

$R_8$ et $R_9$ représentant H ou $SO_3H$ et $R_{10}$ représentant $SO_3H$, un halogène, COOH, $CH_3$, $SO_2CH_2CH_2$-$OSO_3H$ ou $SO_2NH$–$CH_2$–$CH_2$–$OSO_3H$,
n ayant une valeur de 0 à 2,
$R_4$ désignant $SO_3H$.

2. Colorants réactifs de formule:

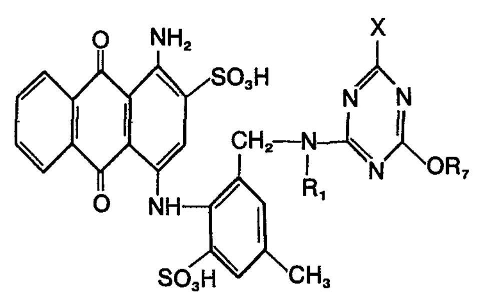

dans laquelle
X = F ou Cl
$R_1$ = H ou méthyle et
$R_7$ = alkyle en $C_1$ à $C_4$ éventuellement substitué.

3. Colorants réactifs de formule:

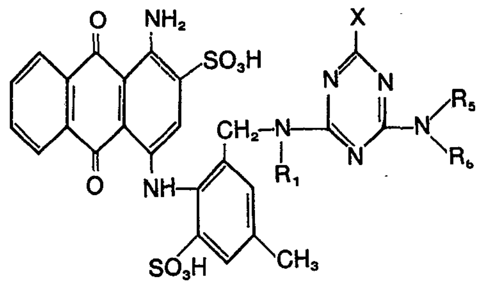

dans laquelle
X = fluor ou chlore
$R_1$ = H ou méthyle
$R_5$ et $R_6$ = indépendamment l'un de l'autre, H, alkyle éventuellement substitué, aralkyle ou un groupe de formule:

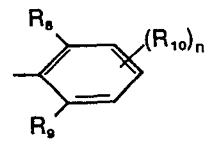

dans laquelle
$R_8$ et $R_9$ = H ou $SO_3H$
et $R_{10}$ = $SO_3H$, un halogène, COOH, $CH_3$, $SO_2CH_2CH_2\text{-}OSO_3H$ ou $SO_2NH\text{-}CH_2\text{-}CH_2\text{-}OSO_3H$
n = 0, 1 ou 2, et en outre, $R_5$ et $R_6$ pouvant former conjointement avec l'atome d'azote qu'ils encadrent un hétérocycle pentagonal ou hexagonal.

4. Utilisation des colorants suivant les revendications 1 à 3 pour la teinture et l'impression de matières portant des groupes hydroxyle ou contenant de l'azote.